# EUROPEAN PATENT APPLICATION

(11) **EP 4 819 705 A1**
(43) Date of publication of application: **07.10.2026**
(21) Application number: 24910575.0
(22) Date of filing: 03.12.2024
(51) Int. Cl.: H04W 56/00

(54) **TIME SYNCHRONIZATION METHOD AND APPARATUS, BASE STATION CIRCUIT, INTEGRATED CIRCUIT, DEVICE, AND MEDIUM**

(30) Priority: 28.12.2023 CN 202311848373
(71) Applicant: Hanshow Technology Co., Ltd., Jiaxing, Zhejiang 314031 (CN)
(72) Inventor: LIANG, Min, Jiaxing, Zhejiang 314000 (CN); ZHANG, Ju, Jiaxing, Zhejiang 314000 (CN); CHEN, Gengfeng, Jiaxing, Zhejiang 314000 (CN); JI, Yaping, Jiaxing, Zhejiang 314000 (CN)
(74) Representative: Brunazzi, Stefano
(86) International application number: PCT/CN2024/136470
(87) International publication number: WO 2025/139643

(57) **Abstract**

Provided are a time synchronization method and apparatus, a base station circuit, an integrated circuit, a device, and a medium. The method is performed cooperatively by a main control board and multiple radio frequency sub-boards in a base station and includes: periodically transmitting, by a first transmission board, an interrupt signal to other boards in the base station; determining, by the main control board, a timestamp according to the interrupt signal and transmitting, by the main control board, communication data carrying the timestamp to the multiple radio frequency sub-boards in the base station; performing, by a radio frequency sub-board, time alignment with other radio frequency sub-boards according to each occurrence time point of the interrupt signal, and upon confirming that a received timestamp transmitted by the main control board is valid, performing, by the radio frequency sub-board, absolute time calibration on a previous occurrence time point of the interrupt signal using the valid timestamp.

## Description

This application claims priority to Chinese Patent Application No. 202311848373.X filed with the China National Intellectual Property Administration (CNIPA) on Dec. 28, 2023, the disclosure of which is incorporated herein by reference in its entirety.

### TECHNICAL FIELD

The present application relates to the technical field of communications and, in particular, to a time synchronization method and apparatus, a base station circuit, an integrated circuit, a device, and a medium.

### BACKGROUND

In modern communication systems, particularly in large-scale device networks such as electronic shelf label communication systems, multiple radio frequency sub-boards are typically required to alternately transmit data. Therefore, strict time synchronization among the multiple radio frequency sub-boards within a base station is critical to ensuring efficient operation of the systems.

However, the radio frequency sub-boards in the base station may be affected by various factors such as temperature, which cause deviations in the internal clock timing of the radio frequency sub-boards.

In the related art, a main control board of the base station transmits a current time message to the radio frequency sub-boards. After parsing the current time message, the radio frequency sub-boards update internal clocks of the radio frequency sub-boards accordingly using the current time message. However, since the transmission and parsing of the time message require a certain amount of time, this results in a mismatch between the actual time and the parsed current time message, thereby preventing precise time alignment among the radio frequency sub-boards.

### SUMMARY

The present application provides a time synchronization method and apparatus, a base station circuit, an integrated circuit, a device, and a medium, which enable time synchronization among multiple radio frequency sub-boards in a base station, solve the problem of relatively large time calibration errors in the related art, and effectively improve the accuracy of time calibration.

According to an aspect of the present application, a time synchronization method for radio frequency sub-boards of a base station is provided, is performed cooperatively by a main control board and multiple radio frequency sub-boards in the base station, and includes the steps below.

A first transmission board periodically transmits an interrupt signal to other boards in the base station, where the first transmission board is the main control board or a pre-designated radio frequency sub-board among the multiple radio frequency sub-boards.

The main control board determines a timestamp according to the interrupt signal and transmits communication data carrying the timestamp to the multiple radio frequency sub-boards in the base station.

A radio frequency sub-board of the multiple radio frequency sub-boards performs time alignment with other radio frequency sub-boards of the multiple radio frequency sub-boards according to each occurrence time point of the interrupt signal, and upon confirming that a received timestamp transmitted by the main control board is valid, performs absolute time calibration on a previous occurrence time point of the interrupt signal using the valid timestamp.

According to another aspect of the present application, a time synchronization apparatus for radio frequency sub-boards of a base station is provided and includes an interrupt signal transmission module, a communication data transmission module, and a time synchronization module.

The interrupt signal transmission module is configured to periodically transmit an interrupt signal to other boards in the base station through a first transmission board, where the first transmission board is a main control board in the base station or a pre-designated radio frequency sub-board among multiple radio frequency sub-boards in the base station.

The communication data transmission module is configured to, through the main control board, determine a timestamp according to the interrupt signal and transmit communication data carrying the timestamp to the multiple radio frequency sub-boards in the base station.

The time synchronization module is configured to, through a radio frequency sub-board of the multiple radio frequency sub-boards, perform time alignment with other radio frequency sub-boards of the multiple radio frequency sub-boards according to each occurrence time point of the interrupt signal, and confirming that a received timestamp transmitted by the main control board is valid, perform absolute time calibration on a previous occurrence time point of the interrupt signal using the valid timestamp.

According to another aspect of the present application, a base station circuit is provided and includes a main control chip and multiple radio frequency chips, where a target chip is preselected from the main control chip and the multiple radio frequency chips as a first transmission chip.

The first transmission chip is configured to periodically transmit an interrupt signal to other chips among the main control chip and the multiple radio frequency chips in the base station circuit.

The main control chip is configured to determine a timestamp according to the interrupt signal and transmit communication data carrying the timestamp to the multiple radio frequency chips in the base station circuit.

A radio frequency chip of the multiple radio frequency chips is configured to perform time alignment with other radio frequency chips of the multiple radio frequency chips according to each occurrence time point of the interrupt signal, and upon confirming that a received timestamp transmitted by the main control chip is valid, perform absolute time calibration on a previous occurrence time point of the interrupt signal using the valid timestamp.

According to another aspect of the present application, an integrated circuit is provided and includes a main control module and multiple radio frequency modules, where a target module is preselected from the main control module and the multiple radio frequency modules as a first transmission module.

The first transmission module is configured to periodically transmit an interrupt signal to other modules among the main control module and the multiple radio frequency modules in the integrated circuit.

The main control module is configured to determine a timestamp according to the interrupt signal and transmit communication data carrying the timestamp to the multiple radio frequency modules in the integrated circuit.

A radio frequency module of the multiple radio frequency modules is configured to perform time alignment with other radio frequency modules of the multiple radio frequency modules according to each occurrence time point of the interrupt signal, and upon confirming that a received timestamp transmitted by the main control module is valid, perform absolute time calibration on a previous occurrence time point of the interrupt signal using the valid timestamp.

According to another aspect of the present application, an electronic device is provided. The electronic device includes at least one processor and a memory communicatively connected to the at least one processor. The memory stores a computer program executable by the at least one processor to cause the at least one processor to perform the time synchronization method for the radio frequency sub-boards of the base station according to any one of the embodiments of the present application.

According to another aspect of the present application, a computer-readable storage medium is provided. The computer-readable storage medium stores computer instructions which, when executed by a processor, are configured to cause the processor to perform the time synchronization method for the radio frequency sub-boards of the base station according to any one of the embodiments of the present application.

### BRIEF DESCRIPTION OF DRAWINGS

FIG. 1 is a flowchart of a time synchronization method for radio frequency sub-boards of a base station according to an embodiment of the present application.
FIG. 2 is a diagram illustrating the internal structure of a base station according to an embodiment of the present application.
FIG. 3 is another flowchart of a time synchronization method for radio frequency sub-boards of a base station according to an embodiment of the present application.
FIG. 4 is another flowchart of a time synchronization method for radio frequency sub-boards of a base station according to an embodiment of the present application.
FIG. 5 is a diagram illustrating the structure of a base station circuit according to an embodiment of the present application.
FIG. 6 is another diagram illustrating the structure of a base station circuit according to an embodiment of the present application.
FIG. 7 is a diagram illustrating the structure of an integrated circuit according to an embodiment of the present application.
FIG. 8 is a diagram illustrating the structure of a time synchronization apparatus for radio frequency sub-boards of a base station according to an embodiment of the present application.
FIG. 9 is a diagram illustrating the structure of an electronic device for performing a time synchronization method for radio frequency sub-boards of a base station according to an embodiment of the present application.

### DETAILED DESCRIPTION

Terms such as "first" and "second" in the description, claims, and drawings of the present application are used to distinguish between similar objects and are not necessarily used to describe a particular order or sequence. It is to be understood that data used in this manner is interchangeable where appropriate so that embodiments of the present application described herein can be implemented in an order not illustrated or described herein. Additionally, terms "include", "have", and any variations thereof are intended to encompass a non-exclusive inclusion. For example, a process, method, system, product, or device that includes a series of steps or units not only includes the expressly listed steps or units but may also include other steps or units that are not expressly listed or are inherent to such process, method, product, or device.

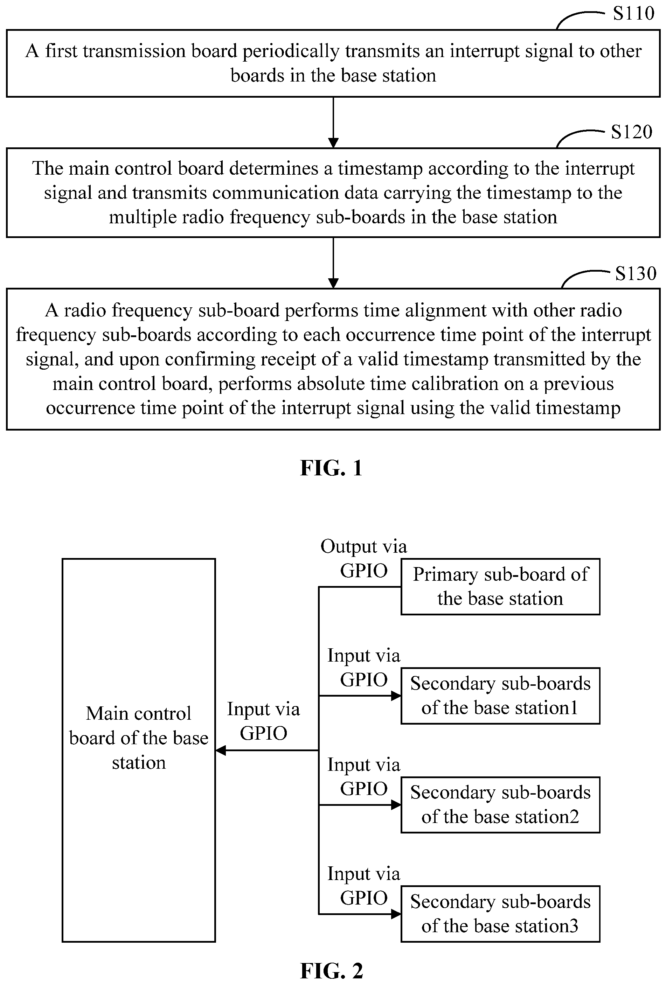

FIG. 1 is a flowchart of a time synchronization method for radio frequency sub-boards of a base station according to an embodiment of the present application. This embodiment is applicable to a case where multiple radio frequency sub-boards are time-synchronized with a main control board in a base station. The method may be performed by a time synchronization apparatus for radio frequency sub-boards of a base station. The time synchronization apparatus for the radio frequency sub-boards of the base station may be implemented in the form of hardware and/or software and may be configured in the base station having data communication and data processing capabilities. As shown in FIG. 1, the method includes the steps below.

In S110, a first transmission board periodically transmits an interrupt signal to other boards in the base station.

The first transmission board is the main control board or a pre-designated radio frequency sub-board.

It is to be understood that the base station includes the main control board and the multiple radio frequency sub-boards. The main control board, as a core control module of a base station device, may be mainly responsible for the management and control of the base station device. The radio frequency sub-boards may be used for transmitting and receiving wireless signals. The main control board can transmit various types of information to the radio frequency sub-boards, such as configuration information, monitoring information, control information, and data information. Through data transmission and processing between the main control board and the radio frequency sub-boards, the base station can provide wireless services efficiently and stably.

Optionally, in the embodiment of the present application, the multiple radio frequency sub-boards may each be an independent chip with radio frequency functions, may be multiple different radio frequency modules within the same chip, or may be a combination thereof, where some radio frequency sub-boards are independent chips, and the others are integrated within the same chip.

Optionally, when the first transmission board is the main control board, the main control board may transmit the interrupt signal to the multiple radio frequency sub-boards; when the first transmission board is the pre-designated radio frequency sub-board, the pre-designated radio frequency sub-board may serve as a primary sub-board of the base station. In this case, the other radio frequency sub-boards in the base station may serve as secondary sub-boards of the base station, and the primary sub-board of the base station may transmit the interrupt signal to the multiple secondary sub-boards of the base station and may also transmit the interrupt signal to the main control board.

Optionally, the first transmission board may transmit the interrupt signal via a general-purpose input/output (GPIO). The GPIO is a hardware interface that can be used to control and monitor digital signals. In the base station, the first transmission board may be connected to the other boards in the base station via GPIO communication lines.

FIG. 2 is an optional diagram illustrating the internal structure of a base station. FIG. 2 mainly illustrates a case where the pre-designated radio frequency sub-board, that is, the primary sub-board of the base station, transmits the interrupt signal to the other boards in the base station. As shown in FIG. 2, the primary sub-board of the base station may transmit the interrupt signal to the multiple secondary sub-boards of the base station and the main control board through a GPIO output port, and the multiple secondary sub-boards of the base station and the main control board may receive the interrupt signal through GPIO input ports, respectively.

The number of radio frequency sub-boards in FIG. 2 is not fixed. In practice, the number of radio frequency sub-boards within the base station may be set according to actual requirements, and the connection between the first transmission board and the other boards in the base station may also be configured according to actual requirements.

Optionally, the advantages of using the GPIO lie in that the interrupt signal transmitted via the GPIO has a lower time latency compared with conventional data transmission. The conventional data transmission may be constrained by factors such as traffic load and parsing time, resulting in relatively large differences in the times at which the multiple radio frequency sub-boards obtain and parse data. In contrast, when the interrupt signal is transmitted via the GPIO, the multiple radio frequency sub-boards can simultaneously sense fluctuations of the interrupt signal, thereby enabling the multiple radio frequency sub-boards to determine the occurrence time point of the interrupt signal as substantially the same time point. This achieves time alignment among the multiple radio frequency sub-boards and ensures the accuracy of time alignment.

Optionally, the first transmission board may periodically deliver the interrupt signal according to a predetermined interrupt signal transmission period. For example, the interrupt signal may be transmitted every one second or every five seconds. The specific periodic duration may be set according to actual requirements.

In S120, the main control board determines a timestamp according to the interrupt signal and transmits communication data carrying the timestamp to the multiple radio frequency sub-boards in the base station.

Optionally, the main control board may transmit the communication data to the multiple radio frequency sub-boards via a Serial Peripheral Interface (SPI) or may also transmit the communication data in another data transmission manner.

Optionally, when the communication data needs to be delivered, the main control board may determine a current timestamp based on an internal clock of the main control board and deliver the current timestamp and the communication data to the radio frequency sub-boards.

Optionally, when delivering the communication data, the main control board may simultaneously transmit the communication data carrying the timestamp to each radio frequency sub-board or may transmit the communication data carrying the timestamp to at least one designated radio frequency sub-board according to receiver information of the communication data.

Optionally, the timestamp is a numerical value representing a specific time point. For example, the main control board may determine, according to actual application requirements, any occurrence time point of the interrupt signal as a timing start point. The clock in the main control board may record the current time as a specific number of seconds elapsed from the timing start point. In an embodiment, when determining that the 10th transmission and reception of the interrupt signal is performed, the main control board may use the 10th occurrence time point of the interrupt signal as the timing start point. When the elapsed time reaches the 30th second counted from the timing start point, the main control board may use 30 seconds as the timestamp and transmit the timestamp to the radio frequency sub-boards.

Optionally, in practical use, data interaction between the main control board and the radio frequency sub-boards is relatively frequent. Therefore, within a relatively short period of time, the multiple radio frequency sub-boards in the base station can receive the communication data that carries the timestamp and is transmitted by the main control board.

In S130, a radio frequency sub-board performs time alignment with other radio frequency sub-boards according to each occurrence time point of the interrupt signal, and upon confirming that a received timestamp transmitted by the main control board is valid, performs absolute time calibration on a previous occurrence time point of the interrupt signal using the valid timestamp.

It is to be understood that, due to the good performance of the GPIO in transmitting the interrupt signal, the multiple radio frequency sub-boards can receive the interrupt signal at substantially the same time point. If the first transmission board is the designated radio frequency sub-board, a time point at which the radio frequency sub-board transmits the interrupt signal and time points at which the other radio frequency sub-boards receive the interrupt signal also fall within a relatively small time range, for example, 100 microseconds. Therefore, occurrence time points of the interrupt signal respectively determined by the multiple radio frequency sub-boards are substantially the same, and errors can be neglected.

Optionally, after determining the same occurrence time point of the interrupt signal, the multiple radio frequency sub-boards may use the occurrence time point of the interrupt signal as the start point of a current timing period.

In an optional example, if a transmission period of the interrupt signal of the first transmission board is five seconds, after determining an occurrence time point of a current interrupt signal, the multiple radio frequency sub-boards may use this time point as the timing start point of the current five-second timing period.

Optionally, when the multiple radio frequency sub-boards determine the same time point as the timing start point of the same timing period, it may be considered that time alignment among these radio frequency sub-boards has been performed. The time alignment may serve as a reference basis for subsequent absolute time calibration.

Optionally, considering that the main control board transmitting the communication data and the multiple radio frequency sub-boards parsing the communication data both require a certain amount of time and may not be as precise as the transmission of the interrupt signal via the GPIO, if the main control board transmits the communication data at the end of a previous timing period, it is likely that the radio frequency sub-boards can only receive the communication data at the beginning of the current timing period. Therefore, after receiving the communication data, the multiple radio frequency sub-boards need to determine the reception time of the communication data. If the reception time falls within a valid range of the timing period, the timestamp carried in the communication data is determined as the valid timestamp; otherwise, the timestamp in the communication data is ignored, and the absolute time calibration is performed when the timestamp is delivered the next time.

Optionally, the valid range of the timing period may be a predetermined time range. For example, a time range spanning 20% to 80% of the current timing period may be determined as the valid range. In an embodiment, if the timing period is five seconds, the duration from the 1st second to the 4th second after the start of the timing period may be determined as the valid range. However, the valid range of the preceding timing period and other examples are provided for illustrative purposes only.

Optionally, after determining the timestamp currently transmitted by the main control board as the valid timestamp, the radio frequency sub-board may use the valid timestamp as the absolute time of the previous occurrence time point of the interrupt signal; that is, the valid timestamp may be used as the absolute time of the timing start point of the current timing period.

In the embodiment of the present application, the first transmission board periodically transmits the interrupt signal to the other boards in the base station, the main control board transmits the communication data carrying the timestamp to the multiple radio frequency sub-boards in the base station, and the radio frequency sub-board performs the time alignment and the absolute time calibration according to the transmission and reception of the interrupt signal and the valid timestamp so that the absolute time calibration is performed on the basis of time-synchronizing the multiple radio frequency sub-boards in the base station. This manner effectively provides compensation for the insufficient accuracy of absolute time in a conventional synchronization solution, effectively improves the accuracy of time calibration, and ensures data synchronization among the multiple radio frequency sub-boards during signal transmission and reception, thereby effectively improving the communication efficiency of the base station.

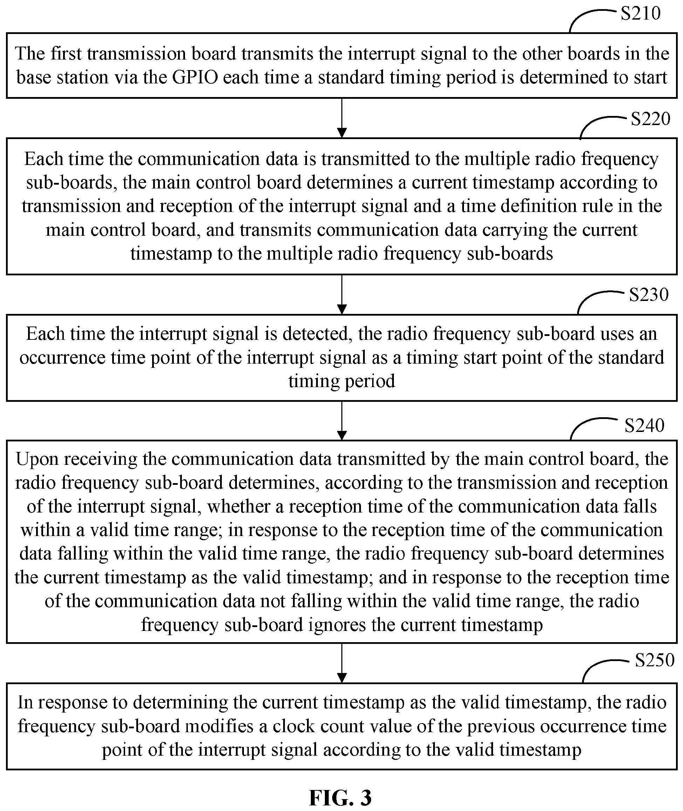

FIG. 3 is another flowchart of a time synchronization method for radio frequency sub-boards of a base station according to an embodiment of the present application. On the basis of the preceding embodiment, this embodiment further specifically describes the time synchronization method for the radio frequency sub-boards of the base station. As shown in FIG. 3, the method includes the steps below.

In S210, the first transmission board transmits the interrupt signal to the other boards in the base station via the GPIO each time a standard timing period is determined to start.

Optionally, the standard timing period may be a predetermined timing period, such as one second or five seconds. Each time a new standard timing period starts, the first transmission board may transmit the interrupt signal to the other boards in the base station via the GPIO.

In S220, each time the communication data is transmitted to the multiple radio frequency sub-boards, the main control board determines a current timestamp according to transmission and reception of the interrupt signal and a time definition rule in the main control board, and transmits communication data carrying the current timestamp to the multiple radio frequency sub-boards.

Optionally, the time definition rule may be a preconfigured rule. For example, upon receiving the interrupt signal for a certain time, the time may be defined as the first second of the clock in the main control board, thereby determining the current timestamp. The time definition rule may be set according to actual requirements, and the timestamp in the main control board may be determined in any suitable manner.

In S230, each time the interrupt signal is detected, the radio frequency sub-board uses an occurrence time point of the interrupt signal as a timing start point of the standard timing period.

In S240, upon receiving the communication data transmitted by the main control board, the radio frequency sub-board determines, according to the transmission and reception of the interrupt signal, whether a reception time of the communication data falls within a valid time range; in response to the reception time of the communication data falling within the valid time range, the radio frequency sub-board determines the current timestamp as the valid timestamp, and S250 is executed; in response to the reception time of the communication data not falling within the valid time range, the radio frequency sub-board ignores the current timestamp.

In S250, in response to determining the current timestamp as the valid timestamp, the radio frequency sub-board modifies a clock count value of the previous occurrence time point of the interrupt signal according to the valid timestamp.

In the embodiment of the present application, the first transmission board periodically transmits the interrupt signal to the other boards in the base station via the GPIO, the main control board transmits the communication data carrying the timestamp to the multiple radio frequency sub-boards in the base station, and the radio frequency sub-board performs the time alignment and the absolute time calibration according to the transmission and reception of the interrupt signal and the valid timestamp so that the absolute time calibration is performed on the basis of time-synchronizing the multiple radio frequency sub-boards in the base station. This manner effectively provides compensation for the insufficient accuracy of absolute time in a conventional synchronization solution, effectively improves the accuracy of time calibration, and ensures data synchronization among the multiple radio frequency sub-boards during signal transmission and reception, thereby effectively improving the communication efficiency of the base station.

In some embodiments, the time synchronization method for the radio frequency sub-boards of the base station may further include the step below.

In response to determining that a periodic calibration condition is satisfied, the main control board determines a valid delivery time point of a calibration timestamp according to the transmission and reception of the interrupt signal and delivers the calibration timestamp to the multiple radio frequency sub-boards upon reaching the valid delivery time point, to enable the multiple radio frequency sub-boards to perform absolute time calibration according to the calibration timestamp.

It is to be understood that, in order to avoid cases where the time at which the main control board delivers the communication data does not fall within the valid time range, in addition to randomly delivering the timestamp along with the communication data, the main control board may further deliver the timestamp periodically, thereby performing periodic absolute time calibration on the radio frequency sub-boards.

Optionally, the periodic calibration condition may be that when a specified periodic calibration time point is reached, it is determined that the periodic calibration condition is satisfied.

Optionally, the valid delivery time point may be determined based on factors such as the valid time range and a standard time for data transmission, so as to reserve a margin for the data transmission. Delivering the communication data at the valid delivery time point can generally ensure that the radio frequency sub-boards receive the communication data within the valid time range.

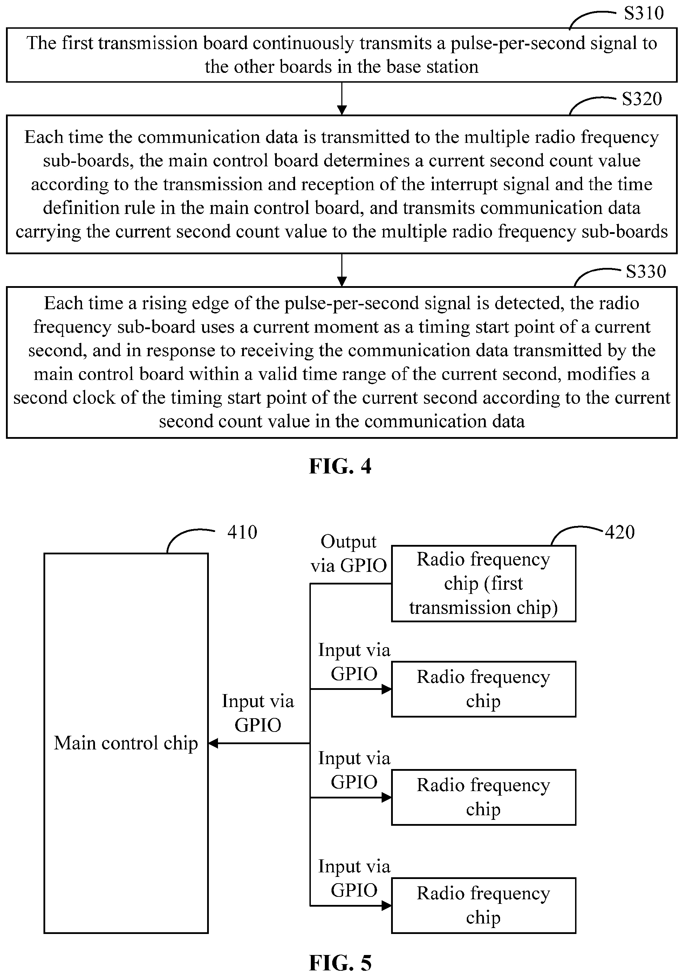

FIG. 4 is another flowchart of a time synchronization method for radio frequency sub-boards of a base station according to an embodiment of the present application. On the basis of the preceding embodiment, this embodiment further specifically describes a second-level time synchronization method for the radio frequency sub-boards of the base station. As shown in FIG. 4, the method includes the steps below.

In S310, the first transmission board continuously transmits a pulse-per-second signal to the other boards in the base station.

In S320, each time the communication data is transmitted to the multiple radio frequency sub-boards, the main control board determines a current second count value according to the transmission and reception of the interrupt signal and the time definition rule in the main control board, and transmits communication data carrying the current second count value to the multiple radio frequency sub-boards.

In S330, each time a rising edge of the pulse-per-second signal is detected, the radio frequency sub-board uses a current moment as a timing start point of a current second, and in response to receiving the communication data transmitted by the main control board within a valid time range of the current second, modifies a second clock of the timing start point of the current second according to the current second count value in the communication data.

In an embodiment, the first transmission board continuously transmits the pulse-per-second signal to the other boards in the base station via the GPIO. The multiple radio frequency sub-boards can detect the rising edge of the pulse-per-second signal every one second and use the detection time of the rising edge as the timing start point of the current second. That is, time alignment is performed on the multiple radio frequency sub-boards every one second. When determining that the tenth transmission and reception of the pulse-per-second signal has been performed, the main control board uses the tenth occurrence time of the rising edge of the pulse-per-second signal as the first second of clock timing in the main control board. When delivering the communication data, the main control board obtains the current second count value of the clock, for example, the 30th second, and carries the second count value in the communication data to be transmitted to the multiple radio frequency sub-boards. If the communication data is received within the valid time range, the multiple radio frequency sub-boards use the second count value in the communication data to modify the second clock of the timing start point of the current second. That is, all the multiple radio frequency sub-boards determine the timing start point of the current second as the 30th second, thereby achieving time synchronization among the multiple radio frequency sub-boards. In the preceding example, the method for determining the clock timing in the main control board and the selected second count value in the main control board are provided for illustrative purposes.

In the embodiment of the present application, the first transmission board continuously transmits the pulse-per-second signal to the other boards in the base station via the GPIO, the main control board transmits the communication data carrying the current second count value to the multiple radio frequency sub-boards in the base station, and the radio frequency sub-board performs the time alignment and the absolute time calibration according to the transmission and reception of the interrupt signal and the current second count value so that the absolute time calibration is performed on the basis of time-synchronizing the multiple radio frequency sub-boards in the base station. This manner effectively provides compensation for the insufficient accuracy of absolute time in a conventional synchronization solution, effectively improves the accuracy of time calibration, and ensures data synchronization among the multiple radio frequency sub-boards during signal transmission and reception, thereby effectively improving the communication efficiency of the base station.

FIG. 5 is a diagram illustrating the structure of a base station circuit according to an embodiment of the present application. As shown in FIG. 5, the base station circuit includes a main control chip 410 and multiple radio frequency chips 420.

A target chip is preselected from the main control chip 410 and the multiple radio frequency chips 420 as a first transmission chip.

The first transmission chip is configured to periodically transmit an interrupt signal to other chips in the base station circuit.

The main control chip 410 is configured to determine a timestamp according to the interrupt signal and transmit communication data carrying the timestamp to the multiple radio frequency chips 420 in the base station circuit.

A radio frequency chip 420 is configured to perform time alignment with other radio frequency chips 420 according to each occurrence time point of the interrupt signal, and upon confirming that a received timestamp transmitted by the main control chip 410 is valid, perform absolute time calibration on a previous occurrence time point of the interrupt signal using the valid timestamp.

Optionally, the first transmission chip may be preselected from the main control chip 410 and the multiple radio frequency chips 420. The main control chip 410 may be selected as the first transmission chip to perform the functions of the first transmission chip, or any radio frequency chip 420 may be selected as the first transmission chip to perform the functions of the first transmission chip. It is to be noted that, even when serving as the first transmission chip, the main control chip 410 or the radio frequency chip 420 may still perform the functions of the main control chip 410 or the radio frequency chip 420.

Optionally, the first transmission chip may be connected to the other chips in the base station circuit via a single GPIO, that is, at least one general-purpose output port is provided in the first transmission chip, and at least one general-purpose input port is provided in each of the other chips in the base station circuit. Alternatively, the first transmission chip may be connected to the other chips in the base station circuit via multiple GPIOs, respectively. That is, when the base station circuit further includes n chips other than the first transmission chip, n general-purpose output ports are provided in the first transmission chip, each general-purpose output port being connected to one GPIO, and each GPIO being connected to one designated chip in the base station circuit.

In the example shown in FIG. 5, one radio frequency chip 420 is preselected as the first transmission chip, one general-purpose output port is provided in the first transmission chip, and the first transmission chip is connected to the main control chip 410 and the other radio frequency chips 420 via a single GPIO.

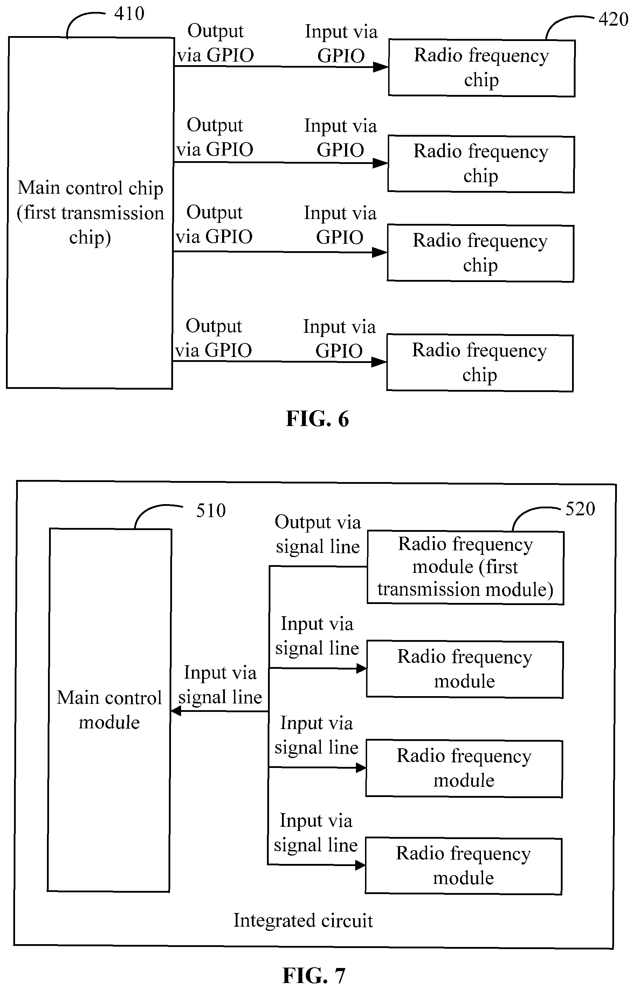

FIG. 6 is another diagram illustrating the structure of a base station circuit according to an embodiment of the present application. As shown in FIG. 6, the main control chip 410 is preselected as the first transmission chip. The base station circuit further includes four radio frequency chips 420. The main control chip 410 is connected to the multiple radio frequency chips 420 via four GPIOs, respectively.

It is to be understood that the examples shown in FIGS. 5 and 6 are provided for illustrative purposes to describe the selection manner of the first transmission chip and the connection manner between the first transmission chip and the other chips. For example, when the first transmission chip is the radio frequency chip 420, the radio frequency chip 420 may also be connected to the other chips via multiple GPIOs, as long as the selection manner of the first transmission chip and the connection manner between the first transmission chip and the other chips satisfy corresponding rules. In addition, the specific number of radio frequency chips 420 shown in FIGS. 5 and 6 is also provided for illustrative purposes only, and the number of radio frequency chips 420 in the base station circuit may be configured according to actual requirements.

Optionally, the first transmission chip may be configured to transmit the interrupt signal to the other chips in the base station circuit via a GPIO each time a standard timing period is determined to start.

Optionally, the radio frequency chip 420 may be configured to, each time the interrupt signal is detected, use an occurrence time point of the interrupt signal as a timing start point of the standard timing period.

Optionally, the main control chip 410 may be configured to, each time the communication data is transmitted to the multiple radio frequency chips 420, determine a current timestamp according to transmission and reception of the interrupt signal and a time definition rule in the main control chip 410, and transmit communication data carrying the current timestamp to the multiple radio frequency chips 420.

Optionally, the radio frequency chip 420 may be further configured to: upon receiving the communication data transmitted by the main control chip 410, determine, according to the transmission and reception of the interrupt signal, whether a reception time of the communication data falls within a valid time range; in response to the reception time of the communication data falling within the valid time range, determine the current timestamp as the valid timestamp; in response to the reception time of the communication data not falling within the valid time range, ignore the current timestamp; and in response to determining the current timestamp as the valid timestamp, modify a clock count value of the previous occurrence time point of the interrupt signal according to the valid timestamp.

Optionally, the main control chip 410 may be further configured to: in response to determining that a periodic calibration condition is satisfied, determine a valid delivery time point of a calibration timestamp according to the transmission and reception of the interrupt signal and deliver the calibration timestamp to the multiple radio frequency chips 420 upon reaching the valid delivery time point, to enable the multiple radio frequency chips 420 to perform absolute time calibration according to the calibration timestamp.

In the embodiment of the present application, the main control chip and the multiple radio frequency chips are configured in the base station circuit, and the target chip is preselected from the main control chip and the multiple radio frequency chips as the first transmission chip; the first transmission chip periodically transmits the interrupt signal to the other chips in the base station circuit, the main control chip transmits the communication data carrying the timestamp to the multiple radio frequency chips in the base station circuit, and the radio frequency chip performs the time alignment and the absolute time calibration according to the transmission and reception of the interrupt signal and the valid timestamp so that the absolute time calibration is performed on the basis of time-synchronizing the multiple radio frequency chips in the base station circuit. This manner effectively provides compensation for the insufficient accuracy of absolute time in a conventional synchronization solution, effectively improves the accuracy of time calibration, and ensures data synchronization among the multiple radio frequency chips during signal transmission and reception, thereby effectively enhancing the communication efficiency of the base station circuit.

FIG. 7 is a diagram illustrating the structure of an integrated circuit according to an embodiment of the present application. As shown in FIG. 7, the integrated circuit includes a main control module 510 and multiple radio frequency modules 520.

A target module is preselected from the main control module 510 and the multiple radio frequency modules 520 as a first transmission module.

The first transmission module is configured to periodically transmit an interrupt signal to other modules in the integrated circuit.

The main control module 510 is configured to determine a timestamp according to the interrupt signal and transmit communication data carrying the timestamp to the multiple radio frequency modules 520 in the integrated circuit.

Optionally, FIG. 7 shows the internal architecture of an integrated circuit, and the main control module 510 and the multiple radio frequency modules 520 are internal structures of the same integrated circuit. Four radio frequency modules 520 are illustrated in FIG. 7; however, in an actual integrated circuit design, the number of radio frequency modules 520 may be configured according to actual requirements.

A radio frequency module 520 is configured to perform time alignment with other radio frequency modules 520 according to each occurrence time point of the interrupt signal, and upon confirming that a received timestamp transmitted by the main control module 510 is valid, perform absolute time calibration on a previous occurrence time point of the interrupt signal using the valid timestamp.

Optionally, the integrated circuit may be regarded as a single chip, and the main control module 510 and the radio frequency modules 520 are different functional modules in the same chip.

Optionally, the first transmission module may be preselected from the main control module 510 and the multiple radio frequency modules 520. The main control module 510 may be selected as the first transmission module to perform the functions of the first transmission module, or any radio frequency module 520 may be selected as the first transmission module to perform the functions of the first transmission module. Even when serving as the first transmission module, the main control module 510 or the radio frequency module 520 may still perform the functions of the main control module 510 or the radio frequency module 520.

Optionally, the first transmission module may be connected to the other modules in the integrated circuit via a single signal line, that is, at least one general-purpose output port is provided in the first transmission module, and at least one general-purpose input port is provided in each of the other modules in the integrated circuit. Alternatively, the first transmission module may be connected to the other modules in the integrated circuit via multiple signal lines, respectively. That is, when the integrated circuit further includes n modules other than the first transmission module, n general-purpose output ports are provided in the first transmission module, each general-purpose output port being connected to one signal line, and each signal line being connected to one designated module in the integrated circuit.

Optionally, the first transmission module may be configured to transmit the interrupt signal to the other modules in the integrated circuit via a signal line each time a standard timing period is determined to start.

Optionally, the radio frequency module 520 may be configured to, each time the interrupt signal is detected, use an occurrence time point of the interrupt signal as a timing start point of the standard timing period.

Optionally, the main control module 510 may be configured to, each time the communication data is transmitted to the multiple radio frequency modules 520, determine a current timestamp according to transmission and reception of the interrupt signal and a time definition rule in the main control module 510, and transmit communication data carrying the current timestamp to the multiple radio frequency modules 520.

Optionally, the radio frequency module 520 may be further configured to: upon receiving the communication data transmitted by the main control module 510, determine, according to the transmission and reception of the interrupt signal, whether a reception time of the communication data falls within a valid time range; in response to the reception time of the communication data falling within the valid time range, determine the current timestamp as the valid timestamp; in response to the reception time of the communication data not falling within the valid time range, ignore the current timestamp; and in response to determining the current timestamp as the valid timestamp, modify a clock count value of the previous occurrence time point of the interrupt signal according to the valid timestamp.

Optionally, the main control module 510 may be further configured to: in response to determining that a periodic calibration condition is satisfied, determine a valid delivery time point of a calibration timestamp according to the transmission and reception of the interrupt signal and deliver the calibration timestamp to the multiple radio frequency modules 520 upon reaching the valid delivery time point, to enable the multiple radio frequency modules 520 to perform absolute time calibration according to the calibration timestamp.

In the embodiment of the present application, the main control module and the multiple radio frequency modules are configured in the integrated circuit, and the target module is preselected from the main control module and the multiple radio frequency modules as the first transmission module; the first transmission module periodically transmits the interrupt signal to the other modules in the integrated circuit, the main control module transmits the communication data carrying the timestamp to the multiple radio frequency modules in the integrated circuit, and the radio frequency module performs the time alignment and the absolute time calibration according to the transmission and reception of the interrupt signal and the valid timestamp so that the absolute time calibration is performed on the basis of time-synchronizing the multiple radio frequency modules in the integrated circuit. This manner effectively provides compensation for the insufficient accuracy of absolute time in a conventional synchronization solution, effectively improves the accuracy of time calibration, and ensures data synchronization among the multiple radio frequency modules during signal transmission and reception, thereby effectively improving the communication efficiency of the integrated circuit.

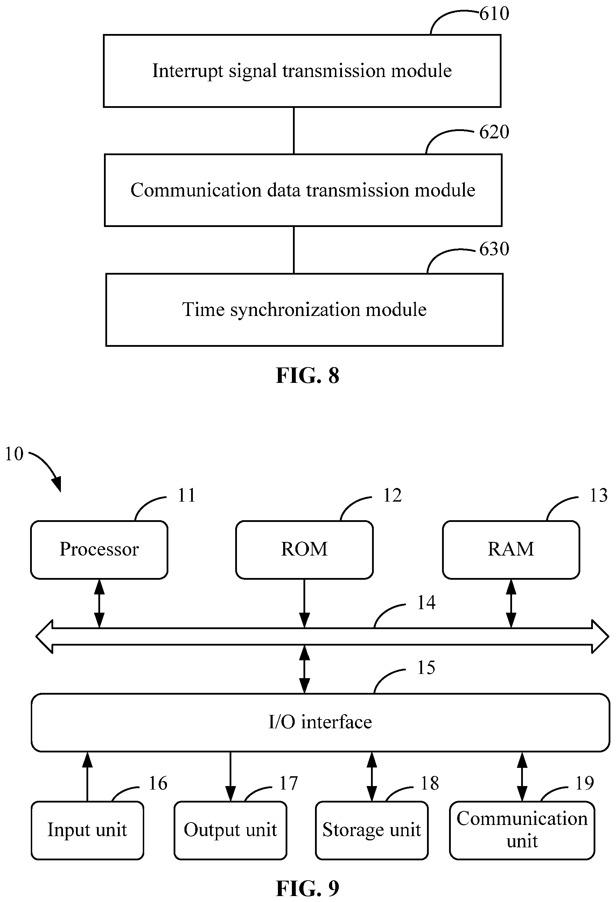

FIG. 8 is a diagram illustrating the structure of a time synchronization apparatus for radio frequency sub-boards of a base station according to an embodiment of the present application. As shown in FIG. 8, the apparatus includes an interrupt signal transmission module 610, a communication data transmission module 620, and a time synchronization module 630.

The interrupt signal transmission module 610 is configured to periodically transmit an interrupt signal to other boards in the base station through a first transmission board, where the first transmission board is a main control board or a pre-designated radio frequency sub-board.

The communication data transmission module 620 is configured to, through the main control board, determine a timestamp according to the interrupt signal and transmit communication data carrying the timestamp to the multiple radio frequency sub-boards in the base station.

The time synchronization module 630 is configured to, through a radio frequency sub-board, perform time alignment with other radio frequency sub-boards according to each occurrence time point of the interrupt signal, and upon confirming that a received timestamp transmitted by the main control board is valid, perform absolute time calibration on a previous occurrence time point of the interrupt signal using the valid timestamp.

In the embodiment of the present application, the first transmission board periodically transmits the interrupt signal to the other boards in the base station, the main control board transmits the communication data carrying the timestamp to the multiple radio frequency sub-boards in the base station, and the radio frequency sub-board performs the time alignment and the absolute time calibration according to the transmission and reception of the interrupt signal and the valid timestamp so that the absolute time calibration is performed on the basis of time-synchronizing the multiple radio frequency sub-boards in the base station. This manner effectively provides compensation for the insufficient accuracy of absolute time in a conventional synchronization solution, effectively improves the accuracy of time calibration, and ensures data synchronization among the multiple radio frequency sub-boards during signal transmission and reception, thereby effectively improving the communication efficiency of the base station.

On the basis of the preceding embodiments, the interrupt signal transmission module 610 may be configured to: through the first transmission board, transmit the interrupt signal to the other boards in the base station via a GPIO each time a standard timing period is determined to start.

On the basis of the preceding embodiments, the time synchronization module 630 may include a time alignment unit and a time calibration unit.

The time alignment unit may be configured to: through the radio frequency sub-board, each time the interrupt signal is detected, use an occurrence time point of the interrupt signal as a timing start point of the standard timing period.

On the basis of the preceding embodiments, the communication data transmission module 620 may be configured to: through the main control board, each time the communication data is transmitted to the multiple radio frequency sub-boards, determine a current timestamp according to transmission and reception of the interrupt signal and a time definition rule in the main control board, and transmit communication data carrying the current timestamp to the multiple radio frequency sub-boards.

On the basis of the preceding embodiments, the time calibration unit may be configured to: through the radio frequency sub-board, upon receiving the communication data transmitted by the main control board, determine, according to the transmission and reception of the interrupt signal, whether a reception time of the communication data falls within a valid time range; in response to the reception time of the communication data falling within the valid time range, determine the current timestamp as the valid timestamp; in response to the reception time of the communication data not falling within the valid time range, ignore the current timestamp; and through the radio frequency sub-board, in response to determining the current timestamp as the valid timestamp, modify a clock count value of the previous occurrence time point of the interrupt signal according to the valid timestamp.

On the basis of the preceding embodiments, the interrupt signal transmission module 610 may be further configured to: when the first transmission board is the pre-designated radio frequency sub-board, periodically transmit the interrupt signal to the main control board via the GPIO through the first transmission board.

On the basis of the preceding embodiments, a periodic calibration module may also be provided and configured to: through the main control board, in response to determining that a periodic calibration condition is satisfied, determine a valid delivery time point of a calibration timestamp according to the transmission and reception of the interrupt signal and deliver the calibration timestamp to the multiple radio frequency sub-boards upon reaching the valid delivery time point, to enable the multiple radio frequency sub-boards to perform absolute time calibration according to the calibration timestamp.

On the basis of the preceding embodiments, the interrupt signal transmission module 610 may be configured to continuously transmit a pulse-per-second signal to the other boards in the base station via the GPIO through the first transmission board.

The communication data transmission module 620 may be configured to: through the main control board, each time the communication data is transmitted to the multiple radio frequency sub-boards, determine a current second count value according to the transmission and reception of the interrupt signal and a time definition rule in the main control board and transmit communication data carrying the current second count value to the multiple radio frequency sub-boards.

The time synchronization module 630 may be configured to: through the radio frequency sub-board, each time a rising edge of the pulse-per-second signal is detected, use a current moment as a timing start point of a current second, and in response to receiving the communication data transmitted by the main control board within a valid time range of the current second, modify a second clock of the timing start point of the current second according to the current second count value in the communication data.

The time synchronization apparatus for the radio frequency sub-boards of the base station provided in the embodiment of the present application can perform the time synchronization method for the radio frequency sub-boards of the base station provided in any one of the embodiments of the present application and has functional modules and beneficial effects that correspond to the performed method.

FIG. 9 is a diagram illustrating the structure of an electronic device 10 for implementing embodiments of the present application. The electronic device is intended to represent various forms of digital computers, for example, a laptop computer, a desktop computer, a worktable, a personal digital assistant, a server, a blade server, a mainframe computer, and another applicable computer. The electronic device may also represent various forms of mobile apparatuses, for example, a personal digital assistant, a cellphone, a smartphone, a wearable device (such as a helmet, glasses, or a watch), and another similar computing apparatus. Herein, the shown components, the connections and relationships between these components, and the functions of these components are illustrative only.

As shown in FIG. 9, the electronic device 10 includes at least one processor 11 and a memory communicatively connected to the at least one processor 11, such as a read-only memory (ROM) 12 and a random-access memory (RAM) 13. The memory stores a computer program executable by the at least one processor. The processor 11 can perform various appropriate actions and processing according to a computer program stored in the ROM 12 or a computer program loaded into the RAM 13 from a storage unit 18. Various programs and data required for the operation of the electronic device 10 are also stored in the RAM 13. The processor 11, the ROM 12, and the RAM 13 are connected to each other through a bus 14. An input/output (I/O) interface 15 is also connected to the bus 14.

Multiple components in the electronic device 10 are connected to the I/O interface 15. The multiple components include an input unit 16 such as a keyboard and a mouse, an output unit 17 such as various types of displays and speakers, the storage unit 18 such as a magnetic disk and an optical disk, and a communication unit 19 such as a network card, a modem, and a wireless communication transceiver. The communication unit 19 allows the electronic device 10 to exchange information/data with other devices over a computer network such as the Internet and/or various telecommunications networks.

The processor 11 may be various general-purpose and/or special-purpose processing components having processing and computing capabilities. Examples of the processor 11 include a central processing unit (CPU), a graphics processing unit (GPU), a special-purpose artificial intelligence (AI) computing chip, a processor executing machine learning models and algorithms, a digital signal processor (DSP), and any appropriate processor, controller, and microcontroller. The processor 11 performs the various methods and processing described in the preceding, for example, the time synchronization method for the radio frequency sub-boards of the base station as described in the embodiments of the present application. The method includes the steps below.

A first transmission board periodically transmits an interrupt signal to other boards in the base station, where the first transmission board is a main control board or a pre-designated radio frequency sub-board.

The main control board determines a timestamp according to the interrupt signal and transmits communication data carrying the timestamp to the multiple radio frequency sub-boards in the base station.

A radio frequency sub-board performs time alignment with other radio frequency sub-boards according to each occurrence time point of the interrupt signal, and upon confirming that a received timestamp transmitted by the main control board is valid, performs absolute time calibration on a previous occurrence time point of the interrupt signal using the valid timestamp.

In some embodiments, the time synchronization method for the radio frequency sub-boards of the base station may be implemented as computer programs tangibly contained in a computer-readable storage medium such as the storage unit 18. In some embodiments, part or all of the computer programs may be loaded and/or installed onto the electronic device 10 via the ROM 12 and/or the communication unit 19. When the computer programs are loaded to the RAM 13 and executed by the processor 11, one or more steps of the preceding time synchronization method for the radio frequency sub-boards of the base station may be performed. Optionally, in other embodiments, the processor 11 may be configured, in any other suitable manner (for example, by use of firmware), to perform the time synchronization method for the radio frequency sub-boards of the base station.

The various embodiments of the systems and techniques described herein may be implemented in digital electronic circuitry, integrated circuitry, a field-programmable gate array (FPGA), an application-specific integrated circuit (ASIC), application specific standard parts (ASSP), a system on a chip (SoC), a complex programmable logic device (CPLD), computer hardware, firmware, software and/or a combination thereof. The various embodiments may include implementations in one or more computer programs. The one or more computer programs are executable and/or interpretable on a programmable system including at least one programmable processor. A programmable processor may be a special-purpose or general-purpose programmable processor for receiving data and instructions from a memory system, at least one input apparatus, and at least one output apparatus, and transmitting data and instructions to the memory system, the at least one input apparatus, and the at least one output apparatus.

Computer programs for the implementation of the methods of the present application may be written in one programming language or any combination of multiple programming languages. The computer programs may be provided for a processor of a general-purpose computer, a special-purpose computer, or another programmable data processing apparatus to enable functions/operations specified in a flowchart and/or a block diagram to be implemented when the computer programs are executed by the processor. The computer programs may be executed entirely on a machine, partly on a machine, as a stand-alone software package, partly on a machine and partly on a remote machine, or entirely on a remote machine or a server.

In the context of the present application, the computer-readable storage medium may be a tangible medium that may include or store a computer program used by or in conjunction with an instruction execution system, apparatus, or device. The computer-readable storage medium may include an electronic, magnetic, optical, electromagnetic, infrared, or semiconductor system, apparatus, or device, or any appropriate combination thereof. Optionally, the computer-readable storage medium may be a machine-readable signal medium. A machine-readable storage medium may include an electrical connection based on one or more wires, a portable computer disk, a hard disk, an RAM, an ROM, an erasable programmable read-only memory (EPROM), a flash memory, an optical fiber, a portable compact disk read-only memory (CD-ROM), an optical memory device, a magnetic memory device, or any suitable combination thereof.

In order that interaction with a user is provided, the systems and techniques described herein may be implemented in the electronic device. The electronic device has a display apparatus (for example, a cathode-ray tube (CRT) or a liquid-crystal display (LCD) monitor) for displaying information to the user; and a keyboard and a pointing apparatus (for example, a mouse or a trackball) through which the user can provide input for the electronic device. Other types of apparatuses may also be used for providing interaction with the user. For example, feedback provided for the user may be sensory feedback in any form (for example, visual feedback, auditory feedback, or tactile feedback); and input from the user may be received in any form (including acoustic input, voice input, or tactile input).

The systems and techniques described herein may be implemented in a computing system including a back-end component (for example, a data server), a computing system including a middleware component (for example, an application server), a computing system including a front-end component (for example, a client computer having a graphical user interface or a web browser through which a user can interact with implementations of the systems and techniques described herein), or a computing system including any combination of such back-end, middleware, or front-end components. Components of a system may be interconnected by any form or medium of digital data communication (for example, a communication network). Examples of the communication network include a local area network (LAN), a wide area network (WAN), a blockchain network, and the Internet.

The computing system may include clients and servers. A client and a server are generally remote from each other and typically interact through a communication network. The relationship between the client and the server arises by virtue of computer programs running on respective computers and having a client-server relationship to each other. The server may be a cloud server, which is also referred to as a cloud computing server or a cloud host. As a host product in a cloud computing service system, the server solves the defects of difficult management and weak service scalability in conventional physical host and virtual private server (VPS) services.

It is to be understood that various forms of the preceding flows may be used with steps reordered, added, or deleted. For example, the steps described in the present application may be executed in parallel, in sequence, or in a different order as long as the desired results of the technical solutions of the present application can be achieved.

## Claims

1. A time synchronization method for radio frequency sub-boards of a base station, performed cooperatively by a main control board and a plurality of radio frequency sub-boards in the base station and comprising:
periodically transmitting, by a first transmission board, an interrupt signal to other boards in the base station, wherein the first transmission board is the main control board or a pre-designated radio frequency sub-board among the plurality of radio frequency sub-boards;
determining, by the main control board, a timestamp according to the interrupt signal, and transmitting, by the main control board, communication data carrying the timestamp to the plurality of radio frequency sub-boards in the base station; and
performing, by a radio frequency sub-board of the plurality of radio frequency sub-boards, time alignment with other radio frequency sub-boards of the plurality of radio frequency sub-boards according to each occurrence time point of the interrupt signal; and upon confirming that a received timestamp transmitted by the main control board is valid, performing, by the radio frequency sub-board, absolute time calibration on a previous occurrence time point of the interrupt signal using the valid timestamp.

2. The method according to claim 1, wherein periodically transmitting, by the first transmission board, the interrupt signal to the other boards in the base station comprises:
transmitting, by the first transmission board, the interrupt signal to the other boards in the base station via a general-purpose input/output, GPIO, each time a standard timing period is determined to start.

3. The method according to claim 2, wherein performing, by the radio frequency sub-board, the time alignment with the other radio frequency sub-boards according to each occurrence time point of the interrupt signal comprises:
each time the interrupt signal is detected, using, by the radio frequency sub-board, an occurrence time point of the interrupt signal as a timing start point of the standard timing period.

4. The method according to claim 1, wherein determining, by the main control board, the timestamp according to the interrupt signal, and transmitting, by the main control board, the communication data carrying the timestamp to the plurality of radio frequency sub-boards in the base station comprises:
each time the communication data is transmitted to the plurality of radio frequency sub-boards, determining, by the main control board, a current timestamp according to transmission and reception of the interrupt signal and a time definition rule in the main control board; and
transmitting, by the main control board, communication data carrying the current timestamp to the plurality of radio frequency sub-boards.

5. The method according to claim 4, wherein upon confirming that a received timestamp transmitted by the main control board is valid, performing, by the radio frequency sub-board, the absolute time calibration on the previous occurrence time point of the interrupt signal using the valid timestamp comprises:
upon receiving the communication data transmitted by the main control board, determining, by the radio frequency sub-board according to the transmission and reception of the interrupt signal, whether a reception time of the communication data falls within a valid time range;
in response to the reception time of the communication data falling within the valid time range, determining, by the radio frequency sub-board, the current timestamp as the valid timestamp; and
in response to the reception time of the communication data not falling within the valid time range, ignoring, by the radio frequency sub-board, the current timestamp; and
in response to determining the current timestamp as the valid timestamp, modifying, by the radio frequency sub-board, a clock count value of the previous occurrence time point of the interrupt signal according to the valid timestamp.

6. The method according to claim 1, further comprising:
in response to determining that a periodic calibration condition is satisfied, determining, by the main control board, a valid delivery time point of a calibration timestamp according to transmission and reception of the interrupt signal; and
delivering, by the main control board, the calibration timestamp to the plurality of radio frequency sub-boards upon reaching the valid delivery time point, to enable the plurality of radio frequency sub-boards to perform absolute time calibration according to the calibration timestamp.

7. The method according to claim 1, further comprising:
continuously transmitting, by the first transmission board, a pulse-per-second signal to the other boards in the base station via a GPIO;
each time the communication data is transmitted to the plurality of radio frequency sub-boards, determining, by the main control board, a current second count value according to transmission and reception of the interrupt signal and a time definition rule in the main control board, and transmitting, by the main control board, communication data carrying the current second count value to the plurality of radio frequency sub-boards; and
each time a rising edge of the pulse-per-second signal is detected, using, by the radio frequency sub-board, a current moment as a timing start point of a current second, and in response to receiving the communication data transmitted by the main control board within a valid time range of the current second, modifying, by the radio frequency sub-board, a second clock of the timing start point of the current second according to the current second count value in the communication data.

8. A time synchronization apparatus for radio frequency sub-boards of a base station, comprising:
an interrupt signal transmission module configured to periodically transmit an interrupt signal to other boards in the base station through a first transmission board, wherein the first transmission board is a main control board in the base station or a pre-designated radio frequency sub-board among the plurality of radio frequency sub-boards in the base station;
a communication data transmission module configured to, through the main control board, determine a timestamp according to the interrupt signal and transmit communication data carrying the timestamp to the plurality of radio frequency sub-boards in the base station; and
a time synchronization module configured to, through a radio frequency sub-board of the plurality of radio frequency sub-boards, perform time alignment with other radio frequency sub-boards of the plurality of radio frequency sub-boards according to each occurrence time point of the interrupt signal, and upon confirming that a received timestamp transmitted by the main control board is valid, perform absolute time calibration on a previous occurrence time point of the interrupt signal using the valid timestamp.

9. A base station circuit, comprising a main control chip and a plurality of radio frequency chips, wherein a target chip is preselected from the main control chip and the plurality of radio frequency chips as a first transmission chip;
the first transmission chip is configured to periodically transmit an interrupt signal to other chips among the main control chip and the plurality of radio frequency chips in the base station circuit;
the main control chip is configured to determine a timestamp according to the interrupt signal and transmit communication data carrying the timestamp to the plurality of radio frequency chips in the base station circuit; and
a radio frequency chip of the plurality of radio frequency chips is configured to perform time alignment with other radio frequency chips of the plurality of radio frequency chips according to each occurrence time point of the interrupt signal, and upon confirming that a received timestamp transmitted by the main control chip is valid, perform absolute time calibration on a previous occurrence time point of the interrupt signal using the valid timestamp.

10. An integrated circuit, comprising a main control module and a plurality of radio frequency modules, wherein a target module is preselected from the main control module and the plurality of radio frequency modules as a first transmission module;
the first transmission module is configured to periodically transmit an interrupt signal to other modules among the main control module and the plurality of radio frequency modules in the integrated circuit;
the main control module is configured to determine a timestamp according to the interrupt signal and transmit communication data carrying the timestamp to the plurality of radio frequency modules in the integrated circuit; and
a radio frequency module of the plurality of radio frequency modules is configured to perform time alignment with other radio frequency modules of the plurality of radio frequency modules according to each occurrence time point of the interrupt signal, and upon confirming that a received timestamp transmitted by the main control module is valid, perform absolute time calibration on a previous occurrence time point of the interrupt signal using the valid timestamp.

11. An electronic device, comprising:
at least one processor; and
a memory communicatively connected to the at least one processor;
wherein the memory stores a computer program executable by the at least one processor to cause the at least one processor to perform the time synchronization method for the radio frequency sub-boards of the base station according to any one of claims 1 to 7.

12. A computer-readable storage medium storing computer instructions which, when executed by a processor, are configured to cause the processor to perform the time synchronization method for the radio frequency sub-boards of the base station according to any one of claims 1 to 7.
